# FASCICULE DE BREVET EUROPEEN

(11) **EP 1 616 450 B1**
(45) Date de publication et mention de la délivrance du brevet: **05.06.2013**
(21) Numéro de dépôt: 04742531.9
(22) Date de dépôt: 16.04.2004
(51) Int. Cl.: H04W 48/18, H04W 36/00

(54) **PROCEDE DE CONTROLE DU TRANSFERT ENTRE RESEAU UMTS ET GSM D' UNE DEMANDE DE SERVICE EN TELEPHONIE MOBILE ET DISPOSITIF DE CONTROLE CORRESPONDANT**
STEUERUNGSVERFAHREN ZUM WEITERREICHEN EINER MOBILEN VERMITTLUNGSDIENSTANFRAGE ZWISCHEN UMTS- UND GSM-NETZWERKEN UND STEUERUNGSANORDNUNG DAFÜR
METHOD FOR CONTROLLING THE TRANSFER OF A MOBILE TELEPHONE SERVICE REQUEST BETWEEN A UMTS NETWORK AND A GSM NETWORK AND CORRESPONDING CONTROL DEVICE

(30) Priorité: 24.04.2003 FR 0305072
(43) Date de publication de la demande: 18.01.2006
(73) Titulaire: FRANCE TELECOM, 75015 Paris (FR)
(72) Inventeur: CHICHMANIAN, Anouch, F-92130 Issy Les Moulineaux (FR); SCHOTT, Anne-Jeanne, F-75011 Paris (FR)
(74) Mandataire: Cabinet Plasseraud
(86) Numéro de dépôt international: PCT/FR2004/000951
(87) Numéro de publication internationale: WO 2004/098224

(56) Documents cités:
- EP-A- 1 257 141
- WO-A-01/58177
- WO-A-03/084261
- "Universal Mobile Telecommunications System (UMTS); UTRAN Iu interface RANAP signalling (3GPP TS 25.413 version 5.4.0 Release 5)" mars 2003 (2003-03), EUROPEAN TELECOMMUNICATIONS STANDARDS INSTITUTE , SOPHIA ANTIPOLIS (FR) , XP002274074 page 177 page 22

## Description

L'invention concerne un procédé de contrôle du transfert entre réseau UMTS et réseau GSM d'une demande de service en téléphonie mobile et un dispositif de contrôle correspondant.

Les systèmes de téléphonie cellulaire actuels, dits de deuxième génération, 2G, du type GSM, sont largement répandus en Europe et dans le monde. Puisant largement dans les solutions techniques relatives à la transmission d'informations par voie radioélectrique et par voie de réseau terrestre, ces informations nécessitant, de ce fait, la mise en oeuvre de processus de traitement et de transmission de données les plus sophistiqués, les systèmes précités sont soumis à une évolution constante, appelée par la très forte demande en échange d'informations et de données au niveau mondial. Par réseau de type GSM ou 2G on entend réseaux GSM et GPRS.

A l'heure actuelle de tels systèmes ont, en particulier, vu leurs spécifications, édictées sous forme de norme, norme GSM, évoluer vers une nouvelle norme, norme UMTS, préparant l'avènement des systèmes de téléphonie cellulaire 3G, dits de troisième génération.

Dans ces conditions, la majeure partie des opérateurs de téléphonie cellulaire GSM actuels ont obtenu, de la part des autorités de régulation des télécommunications, des licences d'exploitation de téléphonie cellulaire UMTS, et prévoient, en conséquence, le déploiement de tels systèmes et réseaux dans un avenir proche, tout en maintenant les systèmes et réseaux 2G existants.

Avec le déploiement des réseaux et systèmes 3G précités, il est vraisemblable, au moins à moyen terme, que la plupart des abonnés en téléphonie GSM actuels migreront vers les offres de service en téléphonie UMTS, en raison des capacités supérieures de cette dernière et des nouveaux services disponibles.

Dans ces conditions, il est prévisible que le trafic d'échanges d'informations engendré par les abonnés en téléphonie UMTS, ces échanges d'informations concernant non seulement les appels téléphoniques, mais également les sessions d'échanges de données numériques, sera a priori acheminé via le système et le réseau UMTS, réduisant ainsi, au fur et à mesure, le taux d'utilisation et d'exploitation des réseaux 2G, GSM.

La présente invention a pour objet de remédier à l'inconvénient précité, inhérent à l'évolution des réseaux 2G vers les réseaux 3G, par la mise en oeuvre d'un processus de transfert 3G/2G des demandes de service en téléphonie mobile, permettant de pérenniser l'utilisation des systèmes et réseaux 2G en dépit de l'évolution précitée vers les systèmes et réseaux 3G.

En particulier, un objet de la présente invention est la mise en oeuvre d'un procédé et d'un dispositif de contrôle du transfert entre réseau UMTS et réseau GSM d'une demande de service en téléphonie mobile permettant à tout opérateur de téléphonie 2G, GSM, et qui a procédé au déploiement d'un système ou réseau 3G, UMTS, d'assurer la transmission sur son réseau 2G d'une partie du trafic d'échange d'informations, engendré par les abonnés de son réseau 3G, en fonction du service demandé mais de manière totalement transparente pour les abonnés du réseau 3G.

En particulier, un autre objet de la présente invention est la mise en oeuvre d'un procédé et d'un dispositif de contrôle du transfert entre réseau UMTS et réseau GSM d'une demande de service en téléphonie mobile, permettant à tout opérateur sur critère de gestion et/ou d'optimisation du trafic, notamment de qualité de service, de débit de données transmises et de surcharge horaire, de commuter l'acheminement des services les moins demandeurs en termes de qualité de service, tels que les appels de conversation téléphonique des abonnés des réseaux 2G et 3G via le seul réseau 2G, GSM.

Le procédé de contrôle du transfert, entre réseau UMTS et réseau GSM d'une demande de service émise en téléphonie mobile, objet de la présente invention, est remarquable en ce que, suite à la transmission de cette demande de service vers le réseau coeur, il consiste, au niveau de ce réseau coeur, à déterminer de manière dynamique le type de service requis, sur critère de discrimination de ce service vis-à-vis du type de réseau UMTS et/ou GSM potentiellement capable de l'acheminer, et en fonction du type de service requis discriminé, à affecter au paramètre de transfert entre réseau UMTS et réseau GSM une valeur codée spécifique, à transmettre la valeur codée spécifique affectée au paramètre de transfert vers le réseau d'accès contrôlant l'exécution de la demande de service, et, à déclencher, au niveau du réseau d'accès, le transfert de la demande de service vers le réseau GSM, en fonction de la valeur codée spécifique du paramètre de transfert transmise.

Le dispositif de contrôle de transfert entre réseau UMTS et réseau GSM d'une demande de service émise en téléphonie mobile, objet de la présente invention, est remarquable en ce qu'il comporte, au moins, un module de règles de positionnement d'une valeur codée spécifique représentative d'un paramètre de transfert entre réseau UMTS et réseau GSM, en fonction de la valeur des attributs de service de toute demande de service et un module de réception et de traitement de toute demande de service. Ce module de réception et de traitement permet de discriminer les attributs de toute demande de service, tels que paramètre de service support mobile, de qualité de service, de service support réseau d'accès, descriptif de l'appel de la demande de service du service support mobile, de délivrer la valeur des attributs de service au module de règles de positionnement, de recevoir du module de règles de positionnement la valeur codée spécifique représentative du paramètre de transfert entre réseau UMTS et GSM et de délivrer le paramètre de transfert entre réseau UMTS et GSM.

Le procédé et le dispositif de contrôle du transfert entre réseau UMTS et réseau GSM d'une demande de service en téléphonie mobile, objets de la présente invention, trouvent application à la gestion optimisée des flux de trafic d'échange d'informations sur les réseaux 3G et 2G, notamment les réseaux UMTS et GSM.

En particulier, le procédé et le dispositif objets de l'invention s'appliquent à toute demande de service et également à toute demande de modification de service. Dans ce dernier cas, les caractéristiques du nouveau service demandé sont prises en compte dans la détermination de la valeur du paramètre "Service Handover" SH.

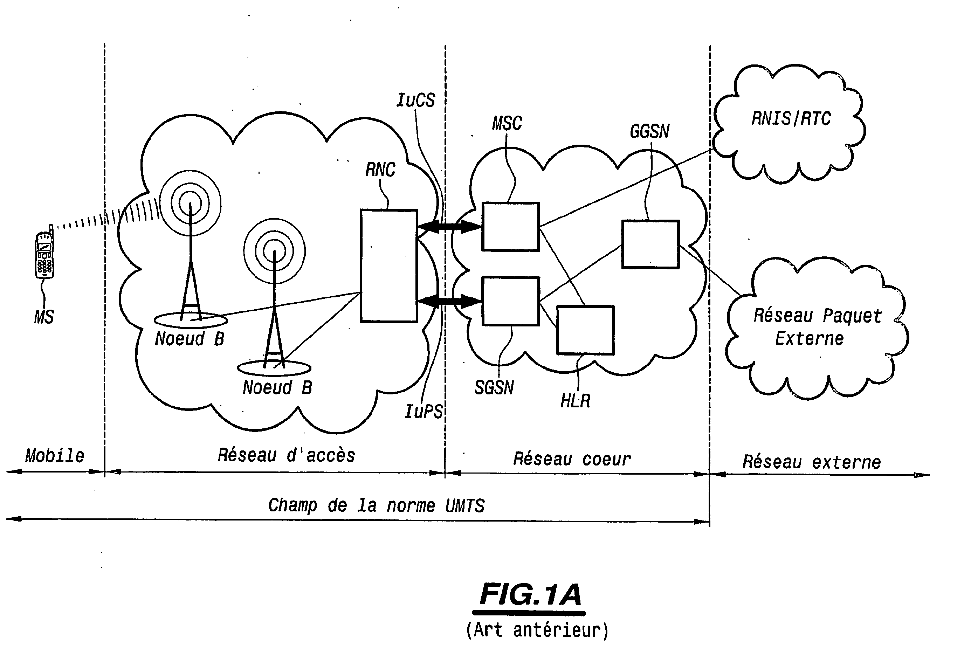

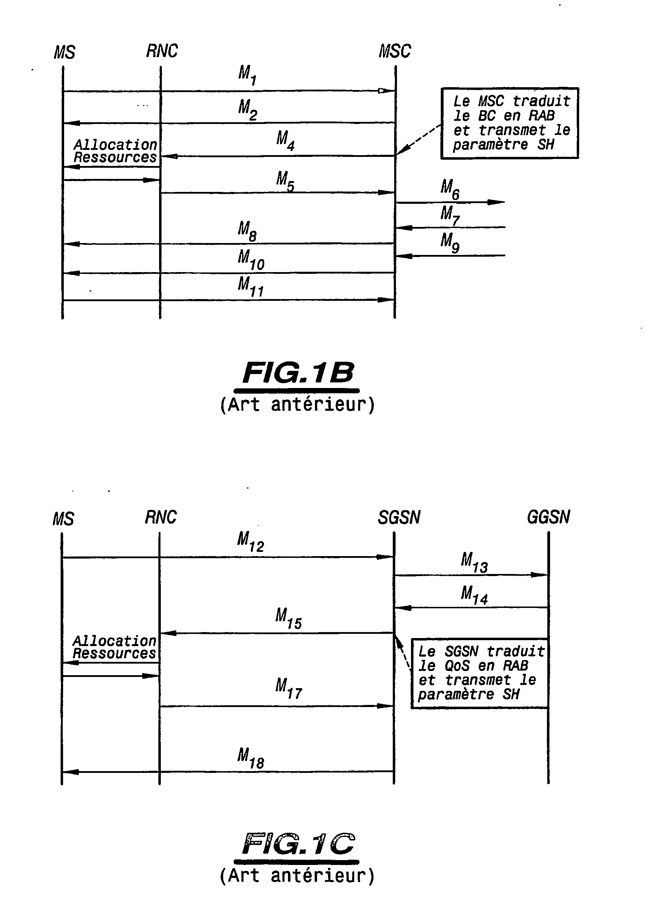

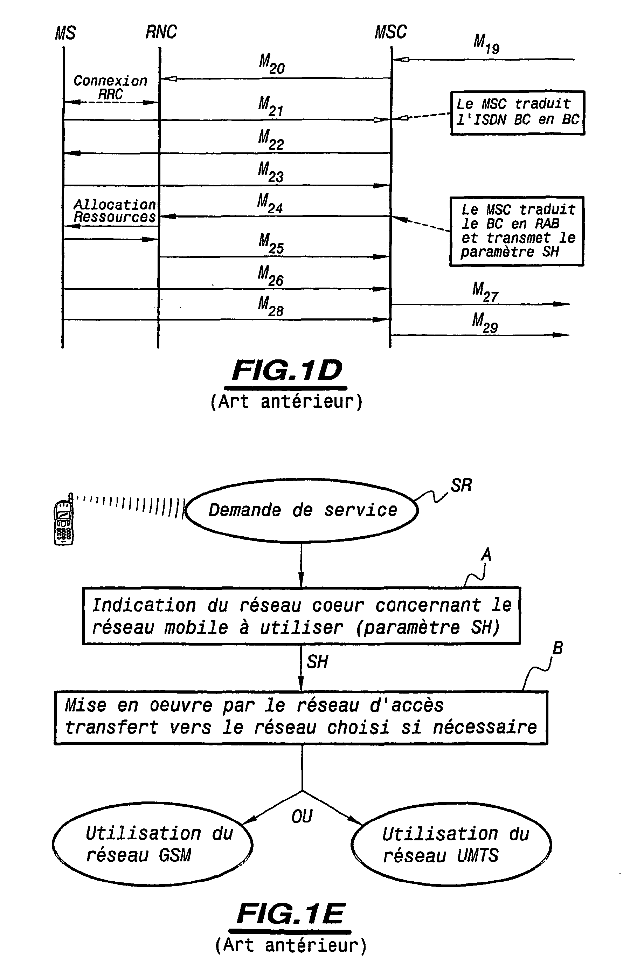

Ils seront mieux compris à la lecture de la description et à l'observation des dessins ci-après, dans lesquels, outre les figures 1 a et 1 b à 1 e de l'art antérieur relatives à la structure des réseaux de téléphonie mobile respectivement au protocole actuel établi par la norme UMTS, en ce qui concerne le transfert simplifié d'une demande de service du réseau 3G vers le réseau 2G :
- la figure 2 représente, à titre purement illustratif, un organigramme des étapes mises en oeuvre conformément au procédé objet de la présente invention ;
- la figure 3 représente, à titre purement illustratif, un schéma fonctionnel d'un dispositif de contrôle du transfert entre réseau UMTS et GSM d'une demande de service en téléphonie mobile, conforme à l'objet de la présente invention.

Préalablement à la description proprement dite du procédé et du dispositif de contrôle du transfert entre réseau UMTS et réseau GSM d'une demande de service émise en téléphonie mobile, conformes à l'objet de la présente invention, à partir d'un terminal de téléphonie mobile par exemple, un rappel de la technique mise en oeuvre pour assurer le transfert d'une telle demande de service émise sur le réseau UMTS vers le réseau GSM, conformément aux dispositions de la norme UMTS désignée "UTRAN lu Interface RANAP Signaling", 3GPP TS 25.413 V3.11.0 sera donné ci-après. Dans la présente description, les expressions entre guillemets correspondent aux désignations selon la norme UMTS.

D'une manière générale, en référence à la figure 1a, on rappelle que l'accès d'un terminal de téléphonie mobile, encore désigné station mobile MS, au réseau de téléphonie mobile est assuré par un réseau d'accès comportant plusieurs noeuds de stations d'émission/réception radioélectriques constitutives des cellules du réseau de téléphonie cellulaire, chaque noeud pouvant gérer plusieurs cellules.

Chaque station d'émission/réception désignée noeud B est reliée à un contrôleur de réseau radioélectrique désigné RNC pour "radio network controller", le réseau d'accès étant constitué par chacun des noeuds précités et par les contrôleurs de réseau radioélectrique ainsi que représenté sur la figure 1a.

Le réseau d'accès est lui-même interconnecté au réseau coeur, le réseau coeur ayant, par définition, la fonction d'assurer l'interfaçage entre chaque réseau d'accès et les réseaux externes, ainsi que représenté sur la figure 1a. La transmission de données sur le réseau externe est habituellement réalisée par exemple par transmission de paquets de données.

Le réseau coeur comporte habituellement un centre de commutation mobile, désigné MSC, ayant essentiellement pour effet d'assurer la transmission des appels téléphoniques émis ou reçus par chaque terminal de téléphonie mobile MS, ces appels téléphoniques ayant été acheminés par le contrôleur de réseau radioélectrique RNC. Le réseau coeur comporte également un dispositif noeud de support GPRS de service désigné noeud SGSN, connecté au contrôleur de réseau radioélectrique et permettant d'assurer la transmission de données destinées à être transmises sous forme de paquets, ces données ayant été acheminées par le contrôleur de réseau radioélectrique RNC. Le noeud SGSN pour "serving GPRS support node", est interfacé avec le réseau étendu ou réseau externe par l'intermédiaire d'un dispositif portail GPRS encore désigné GGSN pour "gateway GPRS support node".

Actuellement, le texte de la norme UMTS précédemment citée prévoit la possibilité pour le réseau coeur d'indiquer, lors de l'établissement d'un appel téléphonique ou d'une session de transmission de données sur le réseau UMTS 3G si cet appel ou cette cession devrait, ne devrait pas ou ne doit pas être transféré vers un réseau 2G, GSM. Une telle opération est réalisée grâce à un paramètre spécifique désigné paramètre "Service Handover", représenté par SH. Ce paramètre, désignant un paramètre de transfert entre réseau UMTS et réseau GSM, peut être envoyé par le centre de commutation mobile MSC lorsqu'il s'agit d'un appel du type téléphonique, voix ou données, initié ou reçu par le terminal mobile ou par le noeud SGSN, lorsque la demande de service concerne une session d'échange de données paquet initié ou reçu par le terminal mobile , lors de la demande d'établissement de support d'accès radioélectrique désigné RAB pour "Radio Access Bearer" ainsi que l'indiquent les figures 1b, 1c et 1d.

Le paramètre "Service Handover" SH, ou paramètre de transfert entre réseau UMTS et réseau GSM, peut alors prendre trois valeurs, lesquelles sont définies de la manière ci-après par le texte de la norme UMTS précédemment mentionné :
- SH = "should" : devrait, l'appel ou la session devrait être transféré vers le réseau GSM dès que possible. Toutefois, la décision finale incombe au réseau d'accès tel que décrit en liaison avec la figure 1 a ;
- SH = "should not" : ne devrait pas, l'appel ou la session devrait rester sur le réseau UMTS le plus longtemps possible. Cependant, la décision finale incombe également au réseau d'accès ;
- SH = "shall not" : ne doit pas, l'appel ou la session ne doit pas être transféré vers le réseau GSM. Cette contrainte implique que le réseau d'accès ne doit pas initier le transfert vers le réseau GSM pour le terminal de téléphonie mobile MS pendant toute la durée de l'appel ou de la session d'échange de données.

Bien entendu, les valeurs du paramètre "Service Handover" ou de transfert entre réseau UMTS et réseau GSM, SH, précité sont des valeurs codées spécifiques.

La valeur du paramètre "Service Handover" SH communiquée par le réseau coeur au réseau d'accès est intégrée dans l'algorithme utilisé par le contrôleur de réseau radioélectrique RNC pour définir si un transfert du réseau 3G UMTS au réseau 2G GSM est nécessaire ou non pour le terminal de téléphonie mobile MS considéré.

Le type des messages échangés désignés conformément à la désignation du standard UMTS est donné ci-après pour les figures 1b, 1c et 1d.

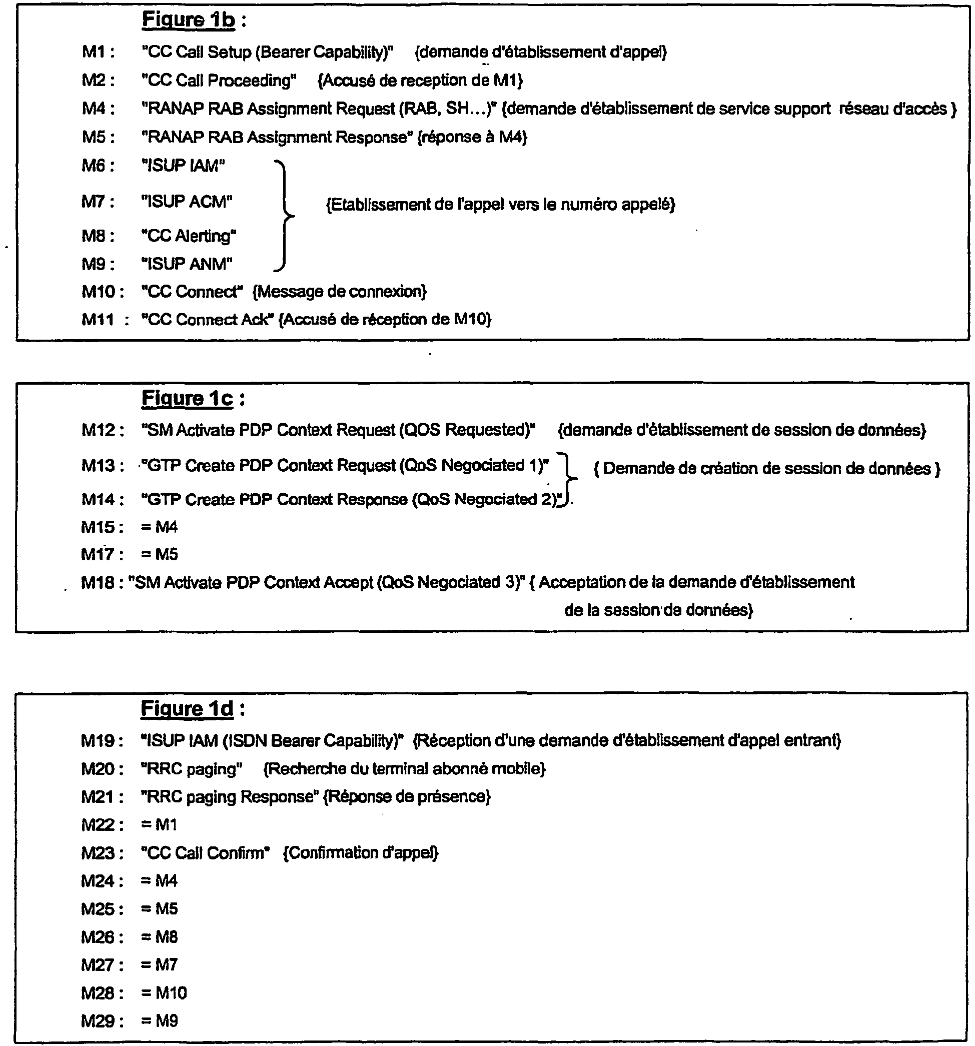

Dans les tableaux précédents, les expressions entre accolades donnent la traduction fonctionnelle des messages désignés conformément au standard UMTS.

La technique actuelle peut alors être schématisée de la manière ci-après ainsi que représenté en figure 1e.

Pour toute demande de service dénommée SR, pour "Service Request", émise du terminal de téléphonie mobile MS vers le réseau coeur, le réseau coeur, dans une étape A, transmet les paramètres de service support réseau d'accès RAB vers le réseau d'accès, et fournit ainsi la valeur codée spécifique du paramètre "Service Handover" SH au réseau d'accès.

A titre d'exemple non limitatif, on indique que le texte de la norme actuelle n'impose pas un positionnement dynamique du paramètre SH et un constructeur ou un opérateur peut arbitrairement choisir de donner toujours la même valeur, telle que par exemple ne doit pas pour tous les appels ou les sessions émanant de tout terminal de téléphonie mobile MS.

Un tel mode opératoire ne permet donc pas à l'opérateur de choisir la stratégie de partage de charges à appliquer au transfert des demandes de service du réseau 3G UMTS au réseau 2G GSM.

En outre, ainsi que représenté en figure 1e, l'étape A est alors suivie d'une étape B, laquelle consiste simplement en une mise en oeuvre, par le réseau d'accès, du transfert vers le réseau choisi en fonction de la valeur du paramètre SH.

Suite à l'étape B, soit le réseau UMTS est utilisé pour exécuter la demande de service ou au contraire le réseau GSM.

En outre, le processus décrit en relation avec les figures 1b à 1e et en définitive par les textes précités de la norme UMTS ne prévoit, en aucun cas, une discrimination des demandes de service en fonction du réseau de type 2G ou au contraire 3G, potentiellement capable d'en assurer l'acheminement. Les textes précités ne prévoient en conséquence aucunement la classification des demandes de service selon un tel critère.

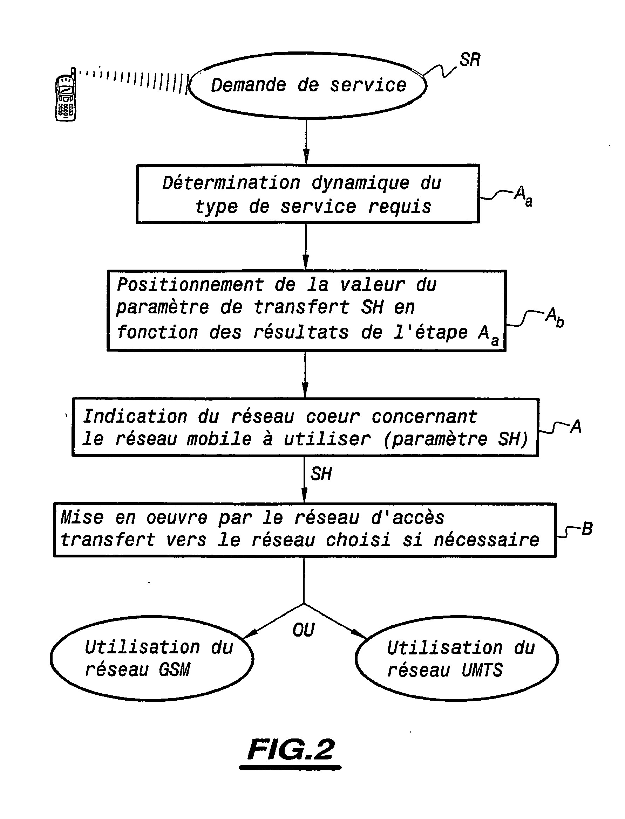

Une description plus détaillée du procédé de contrôle du transfert entre réseau UMTS et réseau GSM d'une demande de service émise en téléphonie mobile, conforme à l'objet de la présente invention, sera maintenant donnée en liaison avec la figure 2.

Sur la figure 2 et la figure 1e, les mêmes éléments ou étapes portent les mêmes références afin de ne pas nuire à la compréhension du procédé objet de la présente invention.

En référence à la figure 2 précitée, on indique que le procédé de contrôle du transfert entre réseau UMTS et réseau GSM d'une demande de service SR émise en téléphonie mobile, conforme à l'objet de la présente invention, consiste, suite à la transmission de la demande de service SR vers le réseau coeur, à effectuer au niveau du réseau coeur des opérations consistant, en une étape Aa, à déterminer, de manière dynamique, le type de service requis sur critère de discrimination du service demandé vis-à-vis du type de réseau UMTS et/ou GSM potentiellement capable de l'acheminer.

La notion de discrimination du service vis-à-vis du type de réseau UMTS et/ou GSM implique, pour toute demande de service considérée, la détermination de la capacité du réseau UMTS et/ou du réseau GSM à acheminer la demande de service considérée.

D'une manière générale, on indique que la discrimination du service vis-à-vis du type de réseau UMTS et/ou GSM permet d'obtenir un type de service requis discriminé, c'est-à-dire susceptible d'être acheminé soit par le réseau UMTS seul, soit par le réseau UMTS et par le réseau GSM par exemple.

On comprend, en particulier, que la détermination du type de service requis peut être effectuée non seulement à partir du type de demande de service et des exigences nécessaires à l'acheminement de la demande de service précitée mais également en fonction de paramètres de charges locales et/ou temporelles des réseaux UMTS respectivement du réseau GSM susceptibles d'acheminer la demande de service précitée.

L'étape Aa est alors suivie, ainsi que représenté en figure 2, par une étape Ab consistant, en fonction du type de service requis discriminé, à affecter au paramètre de transfert entre réseau UMTS et réseau GSM une valeur codée spécifique, la valeur du paramètre "Service Handover" SH dans le cadre de la norme UMTS.

L'étape consistant à affecter au paramètre "Service Handover" entre réseau UMTS et réseau GSM la valeur codée spécifique précitée correspond à un positionnement de la valeur de ce paramètre en fonction des résultats de l'étape Aa précédente.

L'étape Ab précitée est alors suivie de l'étape A de l'art antérieur consistant à transmettre la valeur codée spécifique du paramètre SH, affectée au paramètre de transfert, vers le réseau d'accès contrôlant l'exécution de la demande de service. Cette opération correspond, de la même manière que dans le cadre du procédé de l'art antérieur, à une indication du réseau coeur concernant le réseau mobile à utiliser.

On comprend, en particulier, que le réseau coeur, dans l'étape A précitée, indique si le réseau GSM ne doit pas, ne devrait pas ou devrait être utilisé grâce au paramètre de transfert SH entre réseau UMTS et réseau GSM, dont la valeur a été déterminée lors des étapes Aa et Ab.

L'étape A précédemment citée est alors suivie de l'étape B de mise en oeuvre, par le réseau d'accès qui a reçu la valeur du paramètre de transfert SH entre réseau UMTS et réseau GSM, du transfert de la demande de service vers le réseau GSM pour acheminer la demande de service en fonction de la valeur codée spécifique SH précitée.

On comprend, ainsi, qu'en fonction de la valeur SH, l'on procède alors à l'utilisation du réseau GSM ou au contraire à l'utilisation du réseau UMTS, ainsi que représenté en figure 2.

D'une manière plus spécifique, on indique que le critère de discrimination de service vis-à-vis du type de réseau UMTS et/ou GSM précédemment mentionné dans la description consiste avantageusement à comparer la valeur d'un ou plusieurs paramètres représentatifs du service à au moins une valeur de référence.

En particulier, les valeurs de référence précitées sont configurables par l'opérateur du réseau UMTS, afin de permettre à ce dernier de gérer au mieux l'utilisation de ce réseau, ainsi que mentionné précédemment dans la description.

En particulier, l'étape Aa de la figure 2 implique l'analyse des champs de valeurs ou composants décrivant qualitativement le service demandé soit par le terminal de téléphonie mobile MS ou le cas échéant, par le réseau lui-même, ces composants comportant, en particulier :
- le paramètre BC pour "Bearer Capability" ou service support mobile ;
- le paramètre "ISDN Bearer Capability", désigné ISDN BC ou paramètre de service support réseau coeur ;
- le paramètre de qualité de service désigné QoS pour "Quality of service" ;
- le paramètre de service de support réseau d'accès désigné RAB pour "Radio Access Bearer".

L'analyse des champs de valeurs ou composants précités permet de déterminer si une demande de service décrite qualitativement par les composants peut être acheminée par un réseau 2G de type GSM ou uniquement par un réseau 3G de type UMTS.

En particulier, on comprend que, conformément à un aspect particulièrement avantageux du procédé objet de la présente invention, la mise en oeuvre de l'étape de détermination du type de service requis peut être effectuée par la mise en place de valeurs de seuil par l'opérateur pour tout ou partie des attributs du paramètre BC, du paramètre ISDN BC, du paramètre QoS ou du paramètre RAB, en fonction de la stratégie de positionnement choisie par l'opérateur précité pour la détermination des services pouvant être offerts par un réseau GSM ou ne pouvant être offerts que par le réseau UMTS. Des exemples correspondants seront donnés ultérieurement dans la description.

On comprend en particulier que la sélection des attributs ou composants décrivant qualitativement la demande de service est laissée à l'initiative de l'opérateur du réseau UMTS et/ou GSM afin de permettre à ce dernier de construire sa propre stratégie de partage de charge de trafic en fonction du service entre les réseaux GSM et UMTS dont il assure la gestion, compte tenu des fonctionnalités supportées par ces derniers.

En ce qui concerne la mise en oeuvre de l'étape Ab de la figure 2, on indique que le processus de positionnement de la valeur du paramètre de transfert entre le réseau UMTS et le réseau GSM, c'est-à-dire du paramètre SH, peut être mis en oeuvre dans les cas plus spécifiques d'appels ou de sessions initiés par le terminal de téléphonie mobile MS ou au contraire pour des appels ou des sessions initiés par le réseau lui-même, ainsi qu'il sera décrit ci-après.

Pour les appels ou sessions initiés par le terminal de téléphonie mobile MS, le processus de positionnement consiste en la possibilité de pouvoir choisir la valeur du paramètre de transfert SH en fonction des résultats de l'analyse effectuée à l'étape Aa :
- d'un ou plusieurs composants ou champs de variables du paramètre BC pour un appel circuit ;
- d'un ou plusieurs paramètres de qualité de service QoS pour les sessions de transmission de données par paquets ;
- d'un ou plusieurs paramètres de service support réseau d'accès RAB si le choix du paramètre est fait après la traduction des paramètres BC ou QoS en paramètres de service support réseau d'accès RAB, pour un appel circuit ou une session d'échange de données par paquets.

Au contraire, pour des appels ou sessions initiés par le réseau lui-même, le processus de positionnement consiste en la possibilité de choisir la valeur du paramètre de transfert SH en fonction :
- d'un ou plusieurs attributs ou champs de variables du paramètre de service support réseau coeur ISDN BC pour un appel circuit ;
- d'un ou plusieurs attributs ou champs de variables du paramètre BC, si le choix du paramètre est fait après la traduction du paramètre de service support réseau coeur ISDN BC en paramètre de service support mobile BC pour un appel circuit ;
- d'un ou plusieurs attributs du paramètre de qualité de service QoS pour les sessions d'échange de données par paquets ;
- d'un ou plusieurs attributs du paramètre de service support réseau d'accès RAB, si le choix du paramètre est fait après la traduction des paramètres de service support mobile BC ou QoS en paramètre de service support réseau d'accès RAB, pour un appel circuit ou une session d'échange de données par paquets.

Deux exemples spécifiques de mise en oeuvre du procédé objet de la présente invention seront maintenant donnés ci-après.

Exemple 1 : l'opérateur de téléphonie mobile décide de positionner le paramètre de transfert SH à partir des attributs du paramètre de service support mobile "Bearer Capability", BC et de qualité de service, QoS.

La décision du positionnement est donc effectuée préalablement à la traduction des paramètres de service support mobile BC ou de qualité de service, QoS en paramètre de service support réseau d'accès "Radio Access Bearer", RAB.

Le processus de positionnement peut alors être effectué de la manière suivante pour assurer la gestion des appels dans le domaine circuit, d'une part, et la gestion des sessions d'échange de données par paquets, d'autre part :
- gestion des appels dans le domaine circuit :
   l'opérateur décide de positionner le paramètre de transfert SH en fonction de la valeur des attributs ITC pour "Information Transfert Capability" et WAIUR pour "Wanted Air Interface User Rate", ces attributs appartiennent au paramètre de service support mobile "Bearer Capability", BC, envoyé par le terminal de téléphonie mobile MS au réseau coeur MSC, lors de l'établissement d'un appel dans le domaine circuit.

L'attribut ITC peut prendre les valeurs suivantes conformément à la norme UMTS "General On Terminal Adaptation Functions for Mobile Stations", 3 GPP TS 27.0 01 V3.11.0.
- "Speech" : utilisé pour décrire un appel voix ;
- UDI pour (Unrestricted Digital) : utilisé pour décrire une session d'échange de données numériques de bout en bout vers un réseau numérique à 64 kbits/s tel que le réseau RNIS en Europe ;
- RDI pour (Restricted Digital) : cet attribut étant semblable à l'attribut UDI précité mais dans le cadre d'un réseau numérique à 56 kbits/s, non utilisé en Europe ;
- 3,1 kHz audio : utilisé pour décrire une session d'échange de données qui utilise une liaison à 3,1 kHz vers un réseau analogique, tel que le réseau téléphonique commuté RTC par exemple ;
- FAX3 : utilisé pour décrire une transmission facsimilé.

L'attribut WAIUR est un attribut descriptif du débit des données transmises sur l'interface entre la station mobile MS et le réseau mobile. Cet attribut peut prendre les valeurs suivantes conformément à la norme précédemment citée relativement à l'attribut ITC :
- 9, 6 ... 9,6 kbit/s ;
- 14,4 ... 14,4 kbit/s ;
- 19,2 ... 19,2 kbit/s ;
- 28,4 ... 38,4 kbit/s ;
- 43,2 ... 43,2 kbit/s ;
- 57,6 ... 57,6 kbit/s ;
- int 38,4 ... interprété par le réseau comme un débit à 38,4 kbit/s
- WAIUR non défini.

Compte tenu des attributs du paramètre précité, l'opérateur peut alors décider des valeurs de seuil et règles de positionnement du paramètre de transfert SH selon les modalités ci-après données à titre d'exemple :
- ITC = " Speech" → SH = "should" ;
- UDI ET WAIUR ≤ 14,4 kbit/s → SH = "should" :
- ITC = UDI ET WAIUR > 14,4 kbits/s → SH = "shall not" ;
- ITC = FAX3 → SH = "should".

Le terme ET désigne l'opérateur logique ET.

Les seuils et règles de positionnement précités peuvent alors être intégrés avantageusement par l'opérateur du réseau dans le centre de commutation mobile MSC du réseau coeur, ainsi qu'il sera décrit ultérieurement dans la description.

### - gestion des sessions d'échange de données par paquets :

L'opérateur du réseau de téléphonie mobile décide de positionner le paramètre de transfert SH en fonction de la valeur des attributs de classe de trafic, désigné TC, et de débit maximum, désigné par MBR pour "Maximum Bit Rate", appartenant au paramètre de qualité de service QoS envoyé par le terminal de téléphonie mobile MS au réseau coeur, lors de l'établissement d'une session d'échange de données par paquets.

L'attribut de classe de trafic TC peut prendre quatre valeurs définies par la norme "QoS Concept and Architectures", 3GPP TS 23.1 107 V3.3.0 :

| Classes de trafic | Classe conversationnelle | Téléchargement en temps réel | Classe Interactive | Tache de fond |
|---|---|---|---|---|
| Caractéristiques Fondamentales | - Préserver la relation de temps entre chaque paquet de la trame | - Préserver la relation de temps entre chaque paquet de la trame paquet de la trame | - Modèle de type question/réponse | - Le destinataire n'attend pas les paquets dans une certaine limite de temps |
| | | | - Préserver le contenu des paquets (taux de bits erreur faible) | |
| | - Contrainte forte au niveau du délai de transmission | | | |
| | | | | - Préserve le contenu des paquets |
| | | - Temps de bufferisation possible | | |
| Exemple d'application | - voix, visiophonie | -Vidéo à la demande, jeu en réseau | Navigation | - Téléchargement de fichiers |

L'attribut MBR est le débit maximum entre le modem du terminal de téléphonie mobile MS et le noeud SGSN dans le réseau coeur.

La norme UMTS précédemment citée indique qu'un tel débit doit être inférieur à 2048 kbit/s, quelle que soit la classe de trafic.

L'opérateur peut, par exemple, décider des valeurs de seuil et règles de positionnement du paramètre de transfert SH selon le choix ci-après :

| | |
|---|---|
| TC=Classe conversationnelle | → SH ='shall not' |
| TC=Téléchargement en temps réel | → SH ='shall not' |
| TC=Classe interactive ET MBR < 80kbits/s | → SH ='should' |

| | |
|---|---|
| TC=Classe interactive ET 80kbits/s ≤ MBR < 150kbits/s | → SH ='should not' |
| TC=Classe interactive ET MBR → 150kbits/s | → SH ='shall not' |
| TC=Tache de fond | → SH ='should' |

Les valeurs de seuil et règles de positionnement précitées sont intégrées dans le noeuds SGSN appartenant au réseau coeur.

Exemple 2 : l'opérateur décide de positionner le paramètre de transfert SH à partir des attributs du paramètre de service support réseau d'accès "Radio Access Bearer", RAB.

Dans cet exemple, la décision du positionnement est effectuée après la traduction des attributs du paramètre de service support mobile "Bearer Capability", BC, ou du paramètre qualité de service, QoS, en paramètre de support réseau d'accès "Radio Access Bearer", RAB.

Dans cette situation, l'opérateur décide de positionner la valeur du paramètre de "Service Handover" SH en fonction de la valeur des attributs de classe de trafic TC, attribut de descripteur statistique de source "Source Statistic Description" SSD et MBR de débit maximum appartenant au paramètre RAB précité, pour les appels circuits et les sessions d'échange de données par paquets.

A titre d'exemple, l'opérateur peut décider des valeurs de seuil et règles de positionnement du paramètre SH ci-après :

| | |
|---|---|
| TC=Classe conversationnelle ET SSD = "Speech" | → SH ='should' |
| TC=Classe conversationnelle ET SSD ≠"Speech" | → SH ='shall not' |
| TC=Téléchargement en temps réel | → SH ='shall not' |
| TC=Classe interactive et MBR < 80kbits/s | → SH ='should' |
| TC=Classe interactive et 80kbits/s ≤ MBR < 150kbits/s | → SH ='should not' |
| TC=Classe interactive et MBR ≥ 150kbits/s | → SH ='shall not' |
| TC=Tache de fond | → SH ='should' |

Dans la situation précitée, les valeurs de seuil et règles de positionnement, telles que définies précédemment, sont intégrées à la fois dans le centre de commutation mobile MSC et dans le noeud SGSN du réseau coeur.

On notera que dans l'exemple précité, l'exemple 2, les mêmes attributs de paramètre RAB sont utilisés dans le domaine circuit et dans le domaine d'échange de données par paquets pour le processus de positionnement du paramètre SH. Un tel mode opératoire définit la même stratégie de positionnement du paramètre de transfert SH dans le domaine circuit et dans le domaine paquet.

Toutefois, l'utilisation des attributs du paramètre de service support d'un réseau d'accès "Radio Access Bearer", RAB, n'implique pas nécessairement de définir la même stratégie dans le domaine circuit et dans le domaine d'échange de données par paquets. Il est bien entendu possible, sans sortir du cadre de l'objet de la présente invention, de choisir des attributs de paramètre de service support réseau d'accès RAB différents pour le positionnement du paramètre de transfert SH dans le domaine circuit et dans le domaine d'échange de données par paquets ou, d'utiliser les mêmes attributs mais avec des valeurs de seuil différentes.

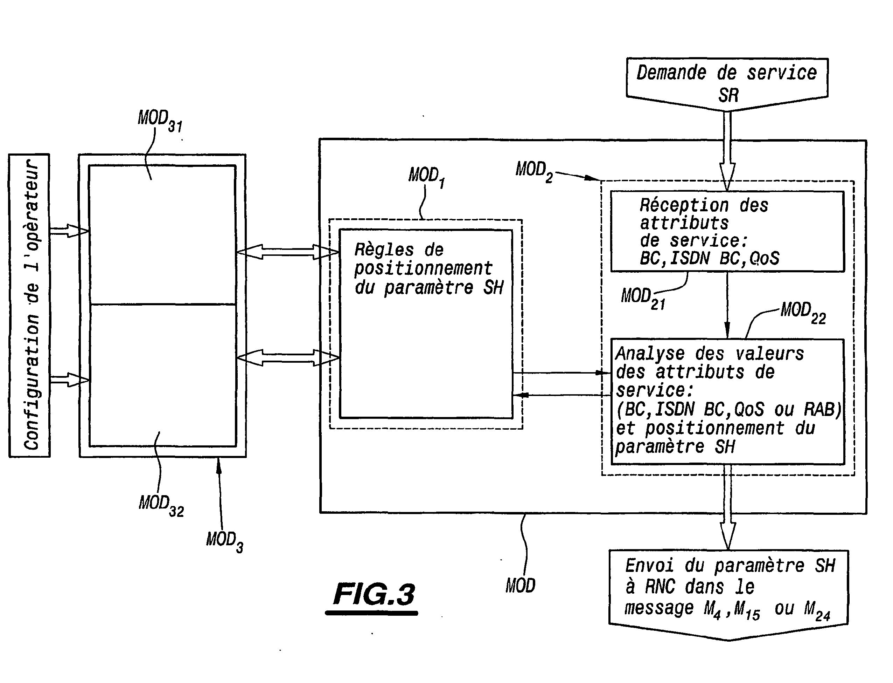

Un mode de mise en oeuvre plus spécifique d'un dispositif de contrôle du transfert entre réseau UMTS et réseau GSM d'une demande de service émise en téléphonie mobile conforme à l'objet de la présente invention sera maintenant donnée en liaison avec la figure 3.

D'une manière générale, et ainsi que représenté sur la figure 3 précitée, le dispositif objet de contrôle du transfert entre réseau UMTS et réseau GSM d'une demande de service émise en téléphonie mobile objet de l'invention est constitué sous forme modulaire, les modules précités étant avantageusement constitués par des modules logiciels.

En conséquence, sur la figure 3, le dispositif objet de l'invention est réputé consister en un module, noté MOD, comportant au moins un module, noté MOD₁, de règle de positionnement d'une valeur codée spécifique représentative du paramètre de transfert SH entre réseau UMTS et réseau GSM, en fonction de la valeur des attributs de service de toute demande de service, ainsi que décrit précédemment dans la description en liaison avec le procédé et les exemples de mise en oeuvre de ce dernier. On comprend, en particulier, que le module MOD₁ précité comprend les règles de positionnement et les valeurs de seuil précédemment décrites avec les exemples 1 et 2 mentionnés.

Ainsi que représenté en figure 3, le dispositif objet de l'invention comporte également un module, noté MOD₂, de réception et de traitement de toute demande de service SR. Ce module de réception et de traitement MOD₂ comprend en particulier, ainsi que représenté sur la figure 3, un sous-module, noté MOD₂₁, de réception et de traitement de toute demande de service, lequel permet de discriminer les attributs de toute demande de service SR, tels que paramètre de service support mobile BC, de qualité de service, QoS, de service support réseau d'accès RAB et de descriptif de l'appel de la demande de service du service support mobile ISDN BC.

Le module de réception et de traitement MOD₂ comporte en outre un sous-module d'analyse des valeurs des attributs de service notés MOD₂₂, lequel permet de délivrer la valeur des attributs de service au module de règles de positionnement MOD₁ et de recevoir de ce dernier la valeur codée spécifique représentative du paramètre de transfert SH entre réseau UMTS et réseau GSM.

Les opérations précitées sont représentées par des flèches entre le module MOD₂ et en particulier, le sous-module MOD₂₂ de ce dernier et le module MOD₁ des règles de positionnement du paramètre SH.

Suite à la comparaison de la valeur des attributs de service précités délivrés par le sous-module MOD₂₁ au sous-module MOD₂₂ avec les valeurs de seuil définissant les règles de positionnement, le sous-module d'analyse MOD₂₂ permet de délivrer le paramètre de transfert SH entre réseau UMTS et réseau GSM au contrôleur de réseau radio-électrique RNC. Cet envoi du paramètre de transfert SH est alors réalisé par l'intermédiaire des messages M4, M15 ou M24, conformément au protocole de l'art antérieur, ainsi que décrit précédemment dans la description en liaison avec les figures 1b à 1e.

Pour assurer une grande facilité d'utilisation du dispositif objet de la présente invention tel que représenté en figure 3, ce dernier peut avantageusement comprendre un module, noté MOD₃, d'interfaçage homme-machine permettant la configuration des règles de positionnement à l'initiative de l'opérateur de réseau UMTS.

A titre d'exemple non limitatif, et ainsi que représenté sur la figure 3, le module d'interfaçage homme/machine MOD₃ peut comporter avantageusement, outre les équipements périphériques, tels que écran, clavier ou autres, un premier sous-module MOD₃₁ permettant l'enregistrement des attributs de service sélectionnés par l'opérateur et à partir desquels les règles de positionnement seront établies, ces attributs de service pouvant correspondre, ainsi que mentionné précédemment dans la description, au paramètre de service support mobile "Bearer Capability", BC, au paramètre de qualité de service, QoS, au paramètre descriptif de rappel de la demande de service du paramètre service support mobile désigné ISDN BC et au paramètre de service support réseau d'accès "Radio Access Bearer", RAB.

En outre, ainsi que représenté sur la figure 3, le module d'interfaçage homme-machine MOD₃ comporte avantageusement un sous-module MOD₃₂ d'enregistrement des seuils et valeurs de seuil, tel que défini précédemment dans les exemples 1 et 2, ces seuils étant définis par l'opérateur pour chaque attribut de service.

En ce qui concerne l'implantation du dispositif objet de l'invention tel que représenté en figure 3, on indique, ainsi qu'il a déjà été mentionné dans la description, que le module de réception et de traitement ainsi que le module de règle de positionnement, c'est-à-dire les sous-modules MOD₁ et MOD₂ de la figure 3, sont avantageusement implantés dans les commutateurs MSC et noeuds SGSN du réseau coeur. Au contraire, le module d'interfaçage MOD₃ peut avantageusement être délocalisé vis-à-vis des sous-modules de règles de positionnement et de réception et de traitement et connecté en réseau à ces derniers, ainsi que représenté sur la figure 3 précitée.

Conformément à un aspect particulièrement remarquable du procédé et du dispositif objets de l'invention, le fait de positionner le paramètre de transfert SH encore désigné "Service Handover", de manière dynamique et en fonction des paramètres, tels que les paramètres BC, ISDN BC, QoS ou RAB offre à tout opérateur de réseau de téléphonie mobile une plus grande flexibilité dans la gestion de la répartition du trafic entre les couvertures GSM 2G et UMTS 3G dont il dispose.

Un tel mode opératoire permet à ce dernier de maîtriser au mieux l'occupation de ses réseaux, tout en pérennisant l'utilisation de son réseau GSM 2G.

L'opérateur des réseaux GSM et UMTS doit tenir compte des capacités du réseau GSM 2G pour définir sa stratégie de mobilité.

Grâce au procédé et au dispositif objets de la présente invention, il peut choisir de déclencher un transfert vers le réseau GSM 2G uniquement pour les services correctement supportés par ce dernier. En particulier, l'amélioration des services acheminés par le réseau GSM 2G doit permettre progressivement d'élargir le spectre des services correctement acheminés par ce type de réseau. Le fait d'utiliser plusieurs attributs de service, pour positionner la valeur du paramètre de transfert SH, permet ainsi à l'opérateur de suivre l'évolution des capacités des réseaux GSM 2G en élargissant progressivement la gamme des services pour lesquels le transfert vers le réseau GSM est autorisé.

Dans de telles conditions, il suffit à tout opérateur disposant d'un réseau UMTS et d'un réseau GSM d'ajuster les valeurs de seuil de certains des attributs de service sans modifier les autres.

L'opérateur concerné peut ainsi autoriser le transfert pour les nouveaux services sans modifier sa stratégie pour les services existants.

A titre d'exemple non limitatif, l'introduction des techniques nouvelles de contrôle de la qualité de service QoS, au niveau du réseau d'accès est susceptible de permettre d'autoriser un transfert vers le réseau GSM 2G pour les services qui requièrent un contrôle strict de la qualité de service de bout en bout.

Dans cette situation, le positionnement du transfert, paramètre SH, peut alors passer par exemple de la valeur qualifiée "shall not" à la valeur qualifiée "should not" pour les services concernés.

La grande flexibilité introduite par le procédé et le dispositif de contrôle du transfert entre réseau UMTS et réseau GSM, objets de la présente invention, permet d'adapter facilement la stratégie de mobilité inter-systèmes aux évolutions à venir des réseaux GSM 2G et UMTS 3G.

## Revendications

1. Procédé de contrôle du transfert, entre réseau UMTS et réseau GSM, d'une demande de service émise en téléphonie mobile, comprenant les étapes suivantes, exécutées suite à la transmission de cette demande de service vers un réseau coeur,
au niveau dudit réseau coeur:
- transmettre (A) une valeur codée spécifique affectée à un paramètre de transfert vers un réseau d'accès contrôlant l'exécution de la demande de service, et, au niveau dudit réseau d'accès :
- choisir de transférer ou non (B) la demande de service vers le réseau GSM en fonction de ladite valeur codée spécifique transmise,
le procédé étant **caractérisé en ce qu'**il comprend les étapes suivantes exécutées au niveau du réseau coeur préalablement à l'étape de transmission de la valeur codée spécifique pour les demandes de service consistant en des appels téléphoniques ou des sessions d'échange de paquets de données initiés par un terminal de téléphonie mobile :
- déterminer de manière dynamique (Aa) le type de service requis sur critère de discrimination dudit service vis-à-vis du type de réseau UMTS et/ou GSM potentiellement capable de l'acheminer,
- affecter (Ab) au paramètre de transfert entre réseau UMTS et réseau GSM une valeur codée spécifique en fonction du type de service requis discriminé ; ladite valeur affectée au paramètre de transfert étant choisie en fonction :
- d'un ou plusieurs attributs du paramètre de service support mobile "Bearer Capability" (BC) pour un appel circuit, d'un ou plusieurs attributs du paramètre de qualité de service (QoS) pour les sessions de transfert de données en mode paquet et de seuils définis par un opérateur du réseau UMTS pour chaque attribut ; ou
- d'un ou plusieurs attributs du paramètre de service support réseau d'accès "Radio Access Bearer" (RAB) si le choix du paramètre est effectué après traduction du paramètre service support mobile "Bearer Capability" (BC) et/ou qualité de service (QoS) en paramètres de service support réseau d'accès de "Radio Access Bearer" (RAB), pour un appel circuit ou une session de transfert de données en mode paquets, et de seuils définis par un opérateur du réseau UMTS pour chaque attribut.

2. Procédé selon la revendication 1, **caractérisé en ce que** ledit critère de discrimination de service consiste à comparer la valeur d'un ou plusieurs paramètres représentatifs du service à au moins une valeur de référence.

3. Procédé selon la revendication 2, **caractérisé en ce que** lesdites valeurs de référence sont configurables par l'opérateur du réseau UMTS.

4. Procédé selon l'une des revendications 1 à 3, **caractérisé en ce que** celui-ci est appliqué à toute demande de modification de service.

5. Système de contrôle de transfert, entre réseau UMTS et réseau GSM, d'une demande de service consistant en des appels téléphoniques ou des sessions d'échange de paquets de données initiés par un terminal de téléphonie mobile, comprenant :
- un réseau coeur apte à recevoir cette demande de service, comportant un module pour transmettre une valeur codée spécifique affectée à un paramètre de transfert entre réseau UMTS et réseau GSM, vers un réseau d'accès contrôlant l'exécution de la demande de service, et
- un réseau d'accès comportant un module pour choisir de transférer ou non ladite demande de service en fonction de la valeur codée spécifique transmise, et pour transférer, le cas échéant, la demande de service vers le réseau GSM,
le système étant **caractérisé en ce que** le réseau coeur comprend :
- un module pour déterminer de manière dynamique le type de service requis sur critère de discrimination dudit service vis-à-vis du type de réseau UMTS et/ou GSM potentiellement capable de l'acheminer,
- un module pour affecter à un paramètre de transfert entre réseauUMTS et réseau GSM une valeur codée spécifique en fonction du type de service requis discriminé , ladite valeur affectée au paramètre de transfert étant choisie par ledit module en fonction :
- d'un ou plusieurs attributs du paramètre de service support mobile "Bearer Capability" (BC) pour un appel circuit, d'un ou plusieurs attributs du paramètre de qualité de service (QoS) pour les sessions de transfert de données en mode paquet et de seuils définis par un opérateur du réseau UMTS pour chaque attribut; ou
- d'un ou plusieurs attributs du paramètre de service support réseau d'accès "Radio Access Bearer" (RAB) si le choix du paramètre est effectué après traduction du paramètre service support mobile "Bearer Capability" (BC) et/ou qualité de service (QoS) en paramètres de service support réseau d'accès de "Radio Access Bearer" (RAB), pour un appel circuit ou une session de transfert de données en mode paquets, et de seuils définis par un opérateur du réseau UMTS pour chaque attribut.

6. Dispositif de contrôle du transfert entre réseau UMTS et réseau GSM d'une demande de service consistant en des appels téléphoniques ou des sessions d'échange de paquets de données initiés par un terminal de téléphonie mobile, **caractérisé en ce qu'**il comprend au moins :
- un module de règles de positionnement (MOD₁) d'une valeur codée spécifique représentative d'un paramètre de transfert entre réseau UMTS et réseau GSM, en fonction de la valeur d'attributs de service descriptifs de toute demande de service et de seuils définis par un opérateur du réseau UMTS pour chaque attribut de service, lesdits attributs de service comprenant :
- un ou plusieurs attributs du paramètre de service support mobile "Bearer Capability" (BC) pour un appel circuit et un ou plusieurs attributs du paramètre de qualité de service (QoS) pour les sessions de transfert de données en mode paquet ; ou
- un ou plusieurs attributs du paramètre de service support réseau d'accès "Radio Access Bearer" (RAB) si le choix du paramètre est effectué après traduction du paramètre service support mobile "Bearer Capability" (BC) et/ou qualité de service (QoS) en paramètres de service support réseau d'accès de "Radio Access Bearer" (RAB), pour un appel circuit ou une session de transfert de données en mode paquets ;
- un module de réception et de traitement (MOD₂) de toute demande de service, permettant
. de discriminer les attributs de service, tels que paramètre de service support mobile, de qualité de service, de service support réseau d'accès;
. de délivrer la valeur des attributs de service au module de règles de positionnement ;
. de recevoir du module de règles de positionnement la valeur codée spécifique représentative du paramètre de transfert entre réseau UMTS et réseau GSM ; et
. de délivrer à un réseau d'accès le paramètre de transfert entre réseau UMTS et réseau GSM.

7. Dispositif selon la revendication 6, **caractérisé en ce que** ledit dispositif comporte en outre un module d'interfaçage homme-machine permettant la configuration des règles de positionnement à l'initiative de l'opérateur de réseau UMTS, les règles de positionnement comprenant le choix des attributs de service pris en compte et les valeurs de seuil correspondantes.

8. Dispositif selon l'une des revendications 6 ou 7, **caractérisé en ce que** le module de règles de positionnement et le module de réception et de traitement sont implantés dans les commutateurs MSC et noeuds SGSN du réseau coeur.

9. Dispositif selon l'une des revendications 7 ou 8, **caractérisé en ce que** ledit module d'interfaçage est délocalisé vis-à-vis desdits module de règles de positionnement et module de réception et de traitement, et connecté en réseau à ces derniers.

10. Noeud d'un réseau coeur de téléphonie mobile **caractérisé en ce qu'**il comprend un dispositif selon l'une quelconque des revendications 6 à 9.

11. Noeud selon la revendication 10, **caractérisé en ce qu'**il agit en qualité de noeud MSC ou de noeud SGSN.

## Patentansprüche

1. Steuerungsverfahren zum Weiterleiten einer mobilen Vermittlungsdienstanfrage zwischen UMTS- und GSM-Netzwerken, umfassend die folgenden Schritte, die nach der Übertragung dieser Dienstanfrage an ein Kernnetzwerk ausgeführt werden,
im Bereich des Kernnetzwerks:
- Übertragung (A) eines spezifischen codierten Wertes, der einem Weiterleitungsparameter zu einem Zugangsnetzwerk, das die Ausführung der Dienstanfrage steuert, zugeordnet ist, und
im Bereich des Zugangsnetzwerks:
- Auswahl einer Weiterleitung oder nicht (B) der Dienstanfrage an das GSM-Netzwerk in Abhängigkeit von dem übertragenen spezifischen codierten Wert,
wobei das Verfahren **dadurch gekennzeichnet ist, dass** es die folgenden Schritte umfasst, die im Bereich des Kernnetzwerks vor dem Schritt der Übertragung des spezifischen codierten Wertes für die Dienstanfragen, bestehend in Telefonanrufen oder Datenpaketaustauschsitzungen, initiiert von einem Mobiltelefonterminal, ausgeführt werden:
- dynamische Bestimmung (Aa) des geforderten Dienstleistungstyps anhand eines Unterscheidungskriteriums des Dienstes gegenüber dem UMTS- und/oder GSM-Netzwerktyp, der potentiell geeignet ist, ihn zu befördern,
- dem Weiterleitungsparameter zwischen dem UMTS- und GSM-Netzwerk Zuteilen (Ab) eines spezifischen codierten Wertes in Abhängigkeit von dem unterschiedenen geforderten Dienstleistungstyp; wobei der dem Weiterleitungsparameter zugeteilte Wert ausgewählt wird in Abhängigkeit:
- von einem oder mehreren Attributen des mobilen Supportdienstparameters "Bearer Capability" (BC) für einen Leitungsruf, von einem oder mehreren Attributen des Dienstqualitätsparameters (QoS) für die Datenübertragungssitzungen im Paketmodus und von Grenzen, die von einem Betreiber des UMTS-Netzwerks für jedes Attribut definiert wurden; oder
- von einem oder mehreren Attributen des Zugangsnetz-Supportdienstparameters "Radio Access Bearer" (RAB), wenn die Wahl des Parameters nach Übersetzung des mobilen Supportdienstparameters "Bearer Capability" (BC) und/oder Dienstqualitätsparameters (QoS) in Zugangsnetz-Supportdienstparameter "Radio Access Bearer" (RAB) für einen Leitungsruf oder eine Datenübertragungssitzung im Paketmodus erfolgt, und von Grenzen, die von einem Betreiber des UMTS-Netzwerks für jedes Attribut definiert wurde.

2. Verfahren nach Anspruch 1, **dadurch gekennzeichnet, dass** das Dienstunterscheidungskriterium darin besteht, den Wert eines oder mehrerer für den Dienst repräsentativer Parameter mit mindestens einem Referenzwert zu vergleichen.

3. Verfahren nach Anspruch 2, **dadurch gekennzeichnet, dass** die Referenzwerte vom Betreiber des UMTS-Netzwerks konfiguriert werden können.

4. Verfahren nach einem der Ansprüche 1 bis 3, **dadurch gekennzeichnet, dass** dieses für jede Dienständerungsanfrage angewandt wird.

5. Steuerungssystem zum Weiterleiten einer Dienstanfrage zwischen UMTS- und GSM-Netzwerken, bestehend in Telefonanrufen oder Austauschsitzungen von Datenpaketen, die von einem Mobiltelefonterminal initiiert wurden, umfassend:
- ein Kernnetzwerk, das diese Dienstanfrage empfangen kann, umfassend ein Modul zur Übertragung eines spezifischen codierten Wertes, der einem Weiterleitungsparameter zwischen UMTS- und GSM-Netzwerken zu einem Zugangsnetzwerk, das die Ausführung der Dienstanfrage steuert, zugeordnet ist, und
- ein Zugangsnetzwerk, umfassend ein Modul für die Auswahl einer Weiterleitung oder nicht der Dienstanfrage in Abhängigkeit von dem übertragenen spezifischen codierten Wert und gegebenenfalls zur Weiterleitung der Dienstanfrage an das GSM-Netzwerk,
wobei das System **dadurch gekennzeichnet ist, dass** das Kernnetzwerk Folgendes umfasst:
- ein Modul zur dynamischen Bestimmung des geforderten Dienstleistungstyps anhand eines Unterscheidungskriteriums des Dienstes gegenüber dem UMTS- und/oder GSM-Netzwerktyp, der potentiell geeignet ist, ihn zu befördern,
- ein Modul, um einem Weiterleitungsparameter zwischen dem UMTS- und GSM-Netzwerk einen spezifischen codierten Wert in Abhängigkeit von dem unterschiedenen geforderten Dienstleistungstyp zuzuteilen, wobei der dem Weiterleitungsparameter zugeteilte Wert ausgewählt wird durch das Modul in Abhängigkeit:
- von einem oder mehreren Attributen des mobilen Supportdienstparameters "Bearer Capability" (BC) für einen Leitungsruf, von einem oder mehreren Attributen des Dienstqualitätsparameters (QoS) für die Datenübertragungssitzungen im Paketmodus und von Grenzen, die von einem Betreiber des UMTS-Netzwerks für jedes Attribut definiert wurden; oder
- von einem oder mehreren Attributen des Zugangsnetz-Supportdienstparameters "Radio Access Bearer" (RAB), wenn die Wahl des Parameters nach Übersetzung des mobilen Supportdienstparameters "Bearer Capability" (BC) und/oder Dienstqualitätsparameters (QoS) in Zugangsnetz-Supportdienstparameter "Radio Access Bearer" (RAB) für einen Leitungsruf oder eine Datenübertragungssitzung im Paketmodus erfolgt, und von Grenzen, die von einem Betreiber des UMTS-Netzwerks für jedes Attribut definiert wurden.

6. Steuerungsvorrichtung zum Weiterleiten einer Dienstanfrage zwischen UMTS- und GSM-Netzwerken, bestehend in Telefonanrufen oder Datenpaketaustauschsitzungen, die von einem Mobiltelefonterminal initiiert wurden, **dadurch gekennzeichnet, dass** sie mindestens Folgendes umfasst:
- ein Modul für Positionierregeln (MOD₁) eines spezifischen codierten Wertes, der für einen Weiterleitungsparameter zwischen UMTS- und GSM-Netzwerken repräsentativ ist, in Abhängigkeit vom Wert von Dienstattributen, die jede Dienstanfrage beschreiben, und von Grenzen, die von einem Betreiber des UMTS-Netzwerks für jedes Dienstattribut definiert wurden, wobei die Dienstattribute Folgendes umfassen:
- ein oder mehrere Attribute des mobilen Supportdienstparameters "Bearer Capability" (BC) für einen Leitungsruf und ein oder mehrere Attribute des Dienstqualitätsparameters (QoS) für die Datenübertragungssitzungen im Paketmodus; oder
- ein oder mehrere Attribute des Zugangsnetz-Supportdienstparameters "Radio Access Bearer" (RAB), wenn die Wahl des Parameters nach Übersetzung des mobilen Supportdienstparameters "Bearer Capability" (BC) und/oder Dienstqualitätsparameters (QoS) in Zugangsnetz-Supportdienstparameter "Radio Access Bearer" (RAB) für einen Leitungsruf oder eine Datenübertragungssitzung im Paketmodus erfolgt;
- ein Empfangs- und Bearbeitungsmodul (MOD₂) jeder Dienstanfrage, das es ermöglicht
• die Dienstattribute, wie mobile Supportdienstparameter, Dienstqualitätsparameter, Zugangsnetz-Supportdienstparameter, zu unterscheiden;
• den Wert der Dienstattribute an das Modul für Positionierregeln zu liefern;
• von dem Modul für Positionierregeln den spezifischen codierten Wert zu empfangen, der für den Weiterleitungsparameter zwischen dem UMTS- und GSM-Netzwerk repräsentativ ist; und
• an ein Zugangsnetz den Weiterleitungsparameter zwischen dem UMTS- und GSM-Netzwerk zu liefern.

7. Vorrichtung nach Anspruch 6, **dadurch gekennzeichnet, dass** die Vorrichtung ferner ein Mensch-Maschine-Schnittstellenmodul umfasst, das die Konfiguration der Positionierregeln auf Initiative des Betreibers des UMTS-Netzwerks ermöglicht, wobei die Positionierregeln die Wahl der berücksichtigten Dienstattribute und die entsprechenden Grenzwerte umfassen.

8. Vorrichtung nach einem der Ansprüche 6 oder 7, **dadurch gekennzeichnet, dass** das Modul für Positionierregeln und das Empfangs- und Bearbeitungsmodul in die MSC-Schalter und SGSN-Knoten des Kernnetzwerks integriert sind.

9. Vorrichtung nach einem der Ansprüche 7 oder 8, **dadurch gekennzeichnet, dass** das Schnittstellenmodul gegenüber dem Modul für Positionierregeln und dem Empfangs- und Bearbeitungsmodul delokalisiert ist und im Netz an diese letztgenannten angeschlossen ist.

10. Knoten eines mobilen Vermittlungskernnetzwerks, **dadurch gekennzeichnet, dass** er eine Vorrichtung nach einem der Ansprüche 6 bis 9 umfasst.

11. Knoten nach Anspruch 10, **dadurch gekennzeichnet, dass** er als MSC-Knoten oder SGSN-Knoten agiert.

## Claims

1. Method of controlling the transfer, between UMTS network and GSM network, of a service request issued by mobile telephone, comprising the following steps performed following the transmission of this service request to a core network,
at the level of said core network:
- transmitting (A) a specific coded value assigned to a parameter of transfer to an access network controlling the execution of the service request, and,
at the level of said access network:
- choosing to transfer or not transfer (B) the service request to the GSM network as a function of said specific coded value transmitted,
the method being **characterized in that** it comprises the following steps executed at the level of the core network prior to the step of transmitting the specific coded value for the service requests consisting of telephone calls or data packet exchange sessions initiated by a mobile telephone terminal :
- determining in a dynamic manner (Aa) the type of service requested by criterion of discrimination of said service in relation to the type of UMTS network and/or GSM network potentially capable of carrying it,
- assigning (Ab) a specific coded value to the parameter of transfer between UMTS network and GSM network as a function of the discriminated type of service requested, said value assigned to the transfer parameter being chosen as a function:
- of one or more attributes of the mobile support service parameter "Bearer Capability" (BC) for a circuit call, of one or more attributes of the quality of service parameter (QoS) for the packet mode data transfer sessions and of thresholds defined by an operator of the UMTS network for each attribute; or
- of one or more attributes of the access network support service parameter "Radio Access Bearer" (RAB) if the choice of the parameter is made after translation of the mobile support service parameter "Bearer Capability" (BC) and/or quality of service parameter (QoS) into "Radio Access Bearer" (RAB) access network support service parameters, for a circuit call or a packet mode data transfer session and of thresholds defined by an operator of the UMTS network for each attribute.

2. Method according to Claim 1, **characterized in that** said service discrimination criterion consists in comparing the value of one or more parameters representative of the service with at least one reference value.

3. Method according to Claim 2, **characterized in that** said reference values are configurable by the operator of the UMTS network.

4. Method according to one of Claims 1 to 3, **characterized in that** it is applied to any service modification request.

5. System for controlling the transfer, between UMTS network and GSM network, of a service request consisting of telephone calls or sessions of exchange of data packets initiated by a mobile telephone terminal, comprising:
- a core network able to receive this service request, comprising a module for transmitting a specific coded value assigned to a parameter of transfer between UMTS network and GSM network, to an access network controlling the execution of the service request, and
- an access network comprising a module for choosing to transfer or not to transfer said service request as a function of the specific coded value transmitted, and for transferring, as the case may be, the service request to the GSM network,
the system being **characterized in that** the core network comprises:
- a module for determining in a dynamic manner the type of service requested by criterion of discrimination of said service in relation to the type of UMTS network and/or GSM network potentially capable of carrying it,
- a module for assigning a specific coded value to a parameter of transfer between UMTS network and GSM network as a function of the discriminated type of service requested, said value assigned to the transfer parameter being chosen by said module as a function:
- of one or more attributes of the mobile support service parameter "Bearer Capability" (BC) for a circuit call, of one or more attributes of the quality of service parameter (QoS) for the packet mode data transfer sessions and of thresholds defined by an operator of the UMTS network for each attribute; or
- of one or more attributes of the access network support service parameter "Radio Access Bearer" (RAB) if the choice of the parameter is made after translation of the mobile support service parameter "Bearer Capability" (BC) and/or quality of service parameter (QoS) into "Radio Access Bearer" (RAB) access network support service parameters, for a circuit call or a packet mode data transfer session and of thresholds defined by an operator of the UMTS network for each attribute.

6. Device for controlling the transfer between UMTS network and GSM network of a service request consisting of telephone calls or sessions of exchange of date packets initiated by a mobile telephone terminal, **characterized in that** it comprises at least:
- a module of setting rules (MOD₁) for setting a specific coded value representative of a parameter of transfer between UMTS network and GSM network, as a function of the value of service attributes descriptive of any service request and of thresholds defined by an operator of the UMTS network for each service attribute, said service attributes comprising:
- one or more attributes of the mobile support service parameter "Bearer Capability" (BC) for a circuit call and one or more attributes of the quality of service parameter (QoS) for the packet mode data transfer sessions; or
- one or more attributes of the access network support service parameter "Radio Access Bearer" (RAB) if the choice of the parameter is made after translation of the mobile support service parameter "Bearer Capability" (BC) and/or quality of service parameter (QoS) into "Radio Access Bearer" (RAB) access network support service parameters, for a circuit call or a packet mode data transfer session;
- a module for receiving and processing (MOD₂) any service request, making it possible
● to discriminate the service attributes, such as mobile network support service parameter, quality of service parameter, access network support service parameter;
● to deliver the value of the service attributes to the setting rules module;
● to receive from the setting rules module the specific coded value representative of the parameter of transfer between UMTS and GSM network; and
● to deliver to an access network the parameter of transfer between UMTS and GSM network.

7. Device according to Claim 6, **characterized in that** said device furthermore comprises a man/machine interfacing module allowing the configuration of the setting rules on the initiative of the UMTS network operator, the setting rules comprising the choice of the service attributes taken into account and the corresponding threshold values.

8. Device according to either of Claims 6 and 7, **characterized in that** the setting rules module and the reception and processing module are installed in the MSC switches and SGSN nodes of the core networks.

9. Device according to either of Claims 7 and 8, **characterized in that** said interfacing module is delocalized in relation to said setting rules module and reception and processing module, and connected in a network to them.

10. Node of a mobile telephone core network **characterized in that** it comprises a device according to any one of Claims 6 to 9.

11. Node according to Claim 10, **characterized in that** it acts in the capacity of MSC node of SGSN node.
